# EUROPEAN PATENT APPLICATION

(11) **EP 4 806 810 A1**
(43) Date of publication of application: **16.09.2026**
(21) Application number: 25163587.6
(22) Date of filing: 13.03.2025
(51) Int. Cl.: B65G 1/04

(54) **A STORAGE FRAME MODULE**

(71) Applicant: AutoStore Technology AS, 5578 Nedre Vats (NO)
(72) Inventor: STUHAUG, Ragnar, 5578 Nedre Vats (NO)
(74) Representative: Kilburn & Strode LLP

(57) **Abstract**

The disclosure relates to a storage frame module for a modular automated storage and retrieval system and associated systems and methods. The storage frame module is configured to connect to one or more of a plurality of other storage frame modules of the modular automated storage and retrieval system. The storage frame module comprises a plurality of longitudinal struts arranged parallel to a first direction. The plurality of longitudinal struts defines a plurality of compartments for receiving a stack of storage containers in the first direction. The storage frame module comprises a first set of transverse struts connected to the plurality of longitudinal struts at a first end of each longitudinal strut. The transverse struts of the first set are arranged perpendicular to the first direction. The first set of transverse struts forms a grid defining a plurality of access openings for passing the stack of storage containers through to access the plurality of compartments. The storage frame module comprises a transverse support structure connected to the plurality of longitudinal struts. The transverse support structure is configured to support a weight of the plurality of longitudinal struts perpendicular to the first direction.

## Description

### TECHNICAL FIELD

The disclosure relates to a storage frame module. More particularly, it relates to a storage frame module for connecting to one or more other storage frame modules, an automated storage and retrieval system comprising a plurality of storage frame modules, and a method of assembling storage frame modules.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

To build an automated storage and retrieval system, the components of the three-dimensional grid are carefully aligned and then fastened together to form columns of the system. This is typically performed row-by-row adding additional columns. Alignment between rows is important so that the rail system on top of the grid does not have any continuities or bends in it, which would be a hazard to the container-handling vehicles travelling thereon. Once the three-dimensional grid is assembled, storage containers are input into the grid by the container-handling vehicles lowering the storage containers into stacks in the grid below the rail system. This process of building and initialising the grid can take months to complete before the automated storage and retrieval system is fully operational.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a storage frame module;
Fig. 6 shows the storage frame module as shown in Fig. 5 loaded with stacks of bins;
Fig. 7 shows the storage frame module as shown in Fig. 5 in a transportation container;
Fig. 8 shows a plurality of storage frame modules according to Fig. 5 positioned adjacent;
Fig. 9 shows a storage frame module;
Fig. 10 shows a plurality of second storage frame modules according to Fig. 9 positioned adjacent; and
Fig. 11 shows a method assembling an automated storage and retrieval system.

### DETAILED DESCRIPTION

In overview, the disclosure relates to a storage frame module that can be combined with other storage frame modules to create a storage frame for an automated storage and retrieval system. The storage frame module has a transverse support structure, e.g. a base or transverse struts, that allows the storage frame module to rest on its side without deforming or collapsing. Accordingly, the storage frame modules can be manufactured far away from the construction site of the automated storage and retrieval system and transported thereto. For example, lying on its side, a storage frame module may be put into a standard shipping container and transported around the world. The length of the shipping container provides room for a tall storage frame that can be rotated to an upright orientation (also referred to herein as a 'second orientation') for assembling into a full-height automated storage and retrieval system. The critical time period between access to the construction site and completion of the automated storage and retrieval system is shortened due to the use of pre-built storage frame modules. Manufacturing storage frame modules before transporting to a construction site for assembly generally improves the construction reliability, as quality assurance can take place on storage frame modules before transportation at the construction site, and there are few actions needed by the on-site constructors.

In some examples, bins are pre-loaded into the storage frame module. Once the storage frame modules are assembled into the automated storage and retrieval system, the process of initialising the system with bins is unnecessary and there is less time needed from completion of construction until the system is fully operational.

### Automated storage and retrieval system overview

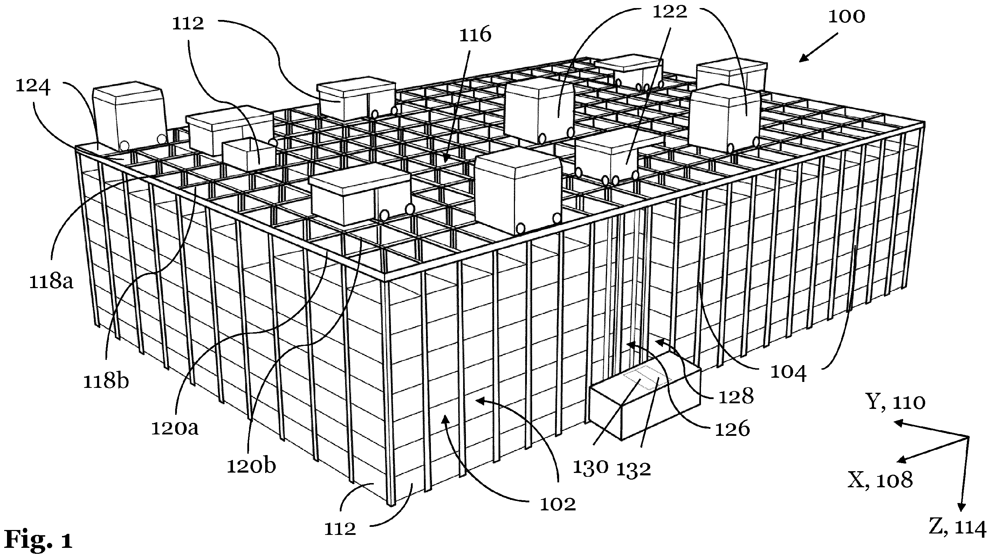

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

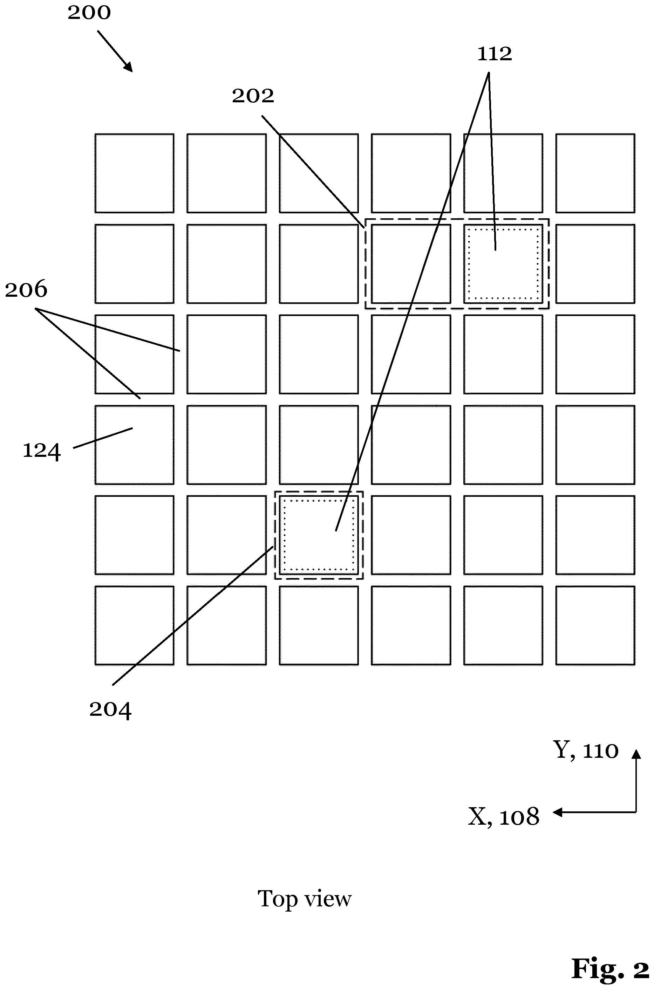

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

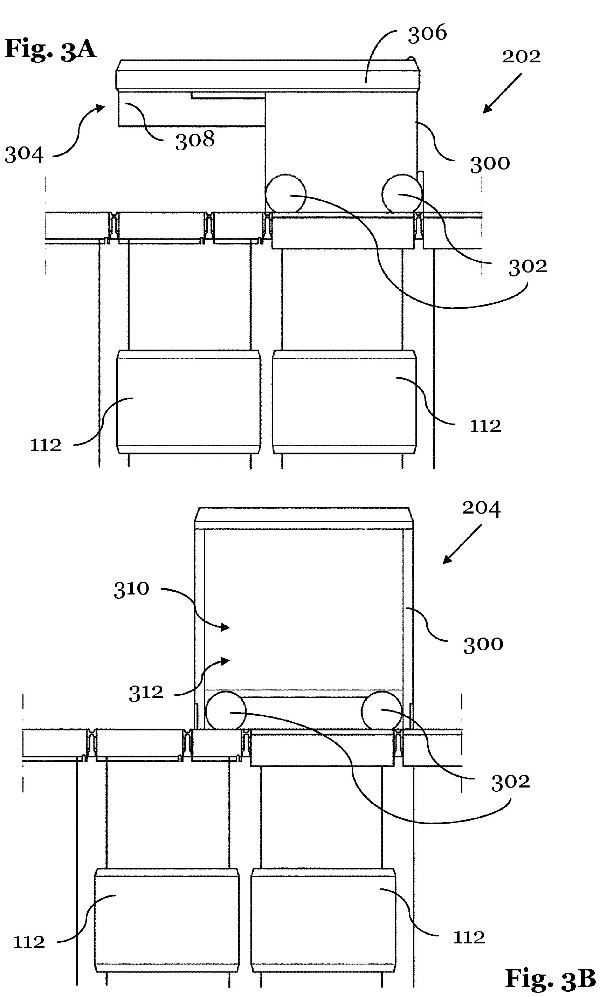

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

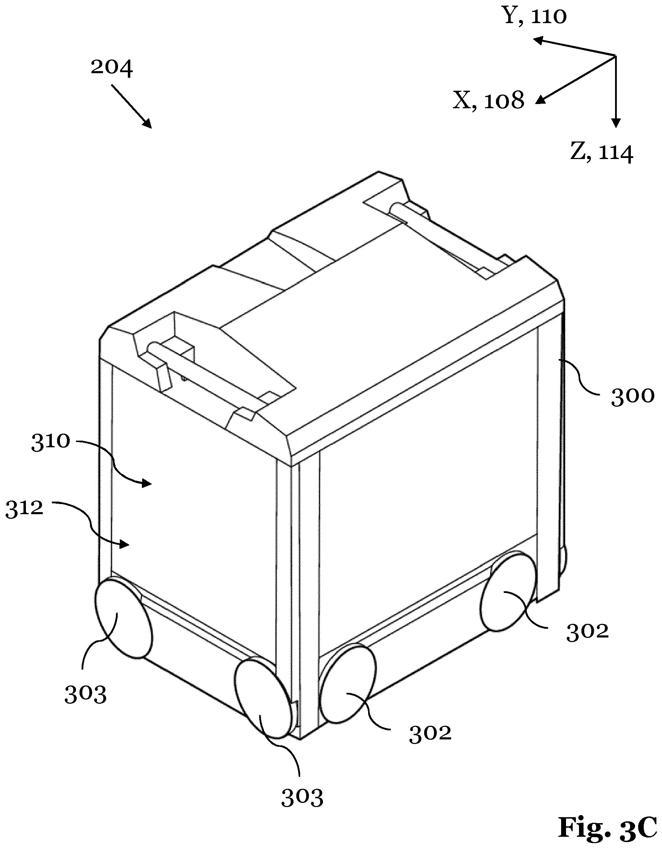

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

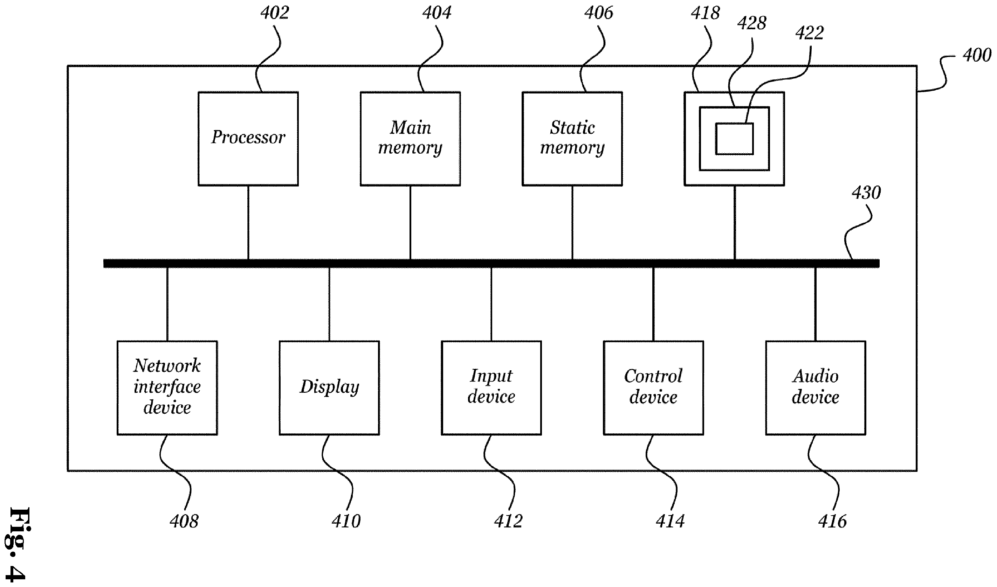

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

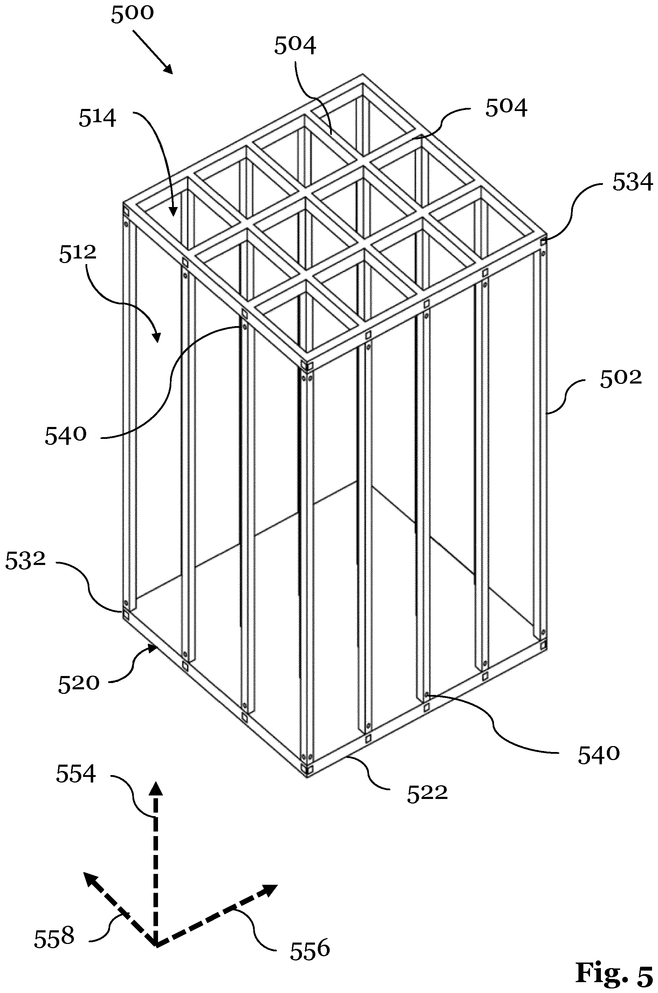

With reference to Fig. 5, a storage frame module 500 comprises twenty longitudinal struts 502 arranged in 4 x 5 rectangular array. In an upright orientation (also referred to herein as a 'second orientation'), as shown by Fig. 5, the longitudinal struts are vertical. Upper ends of the longitudinal struts 502 are connected to a first set of transverse struts 504 arranged in a grid, with each longitudinal strut 502 supporting the grid at an intersection between transverse struts 504. Accordingly, the grid of the storage frame module 500 defines twelve access openings 514 in a 3 x 4 array through the grid (therefore the storage frame module may be referred to as '3 x 4 storage frame module').

At the end of the longitudinal struts 502 opposite the grid, i.e., at lower ends of the longitudinal struts in the upright orientation as shown in Fig. 5, the longitudinal struts are connected to a transverse support structure 520 in the form of a base 522. The base 522 spans the area beneath the grid and under all the access openings 514.

The volume between the grid and the base 522 is divided up into twelve compartments 512, one compartment under each of the twelve access openings 514. Each compartment 514 is defined by the cuboid volume between the centres of four longitudinal struts 502 positioned around a given access opening and between the grid and the base 522. The compartments are configured to receive a stack for bins 112 as part of an automated storage and retrieval system as defined above with reference to Fig. 1 to Fig. 4.

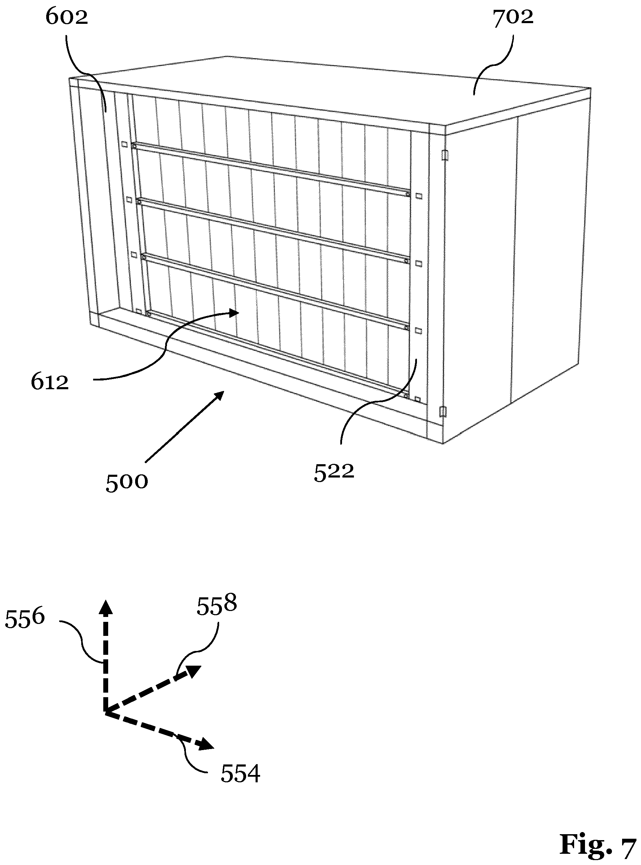

The longitudinal struts are arranged parallel to a first direction 554 and the transverse struts are arranged in directions perpendicular to the first direction 554. In particular, the transverse struts are arranged parallel to a second direction 556 or a third direction 558, wherein the second and third directions are perpendicular to each other (as well as both perpendicular to the first direction). This definition of the first, second, and third direction is used consistently herein regardless of the orientation of the storage frame module. For example, when the storage frame module is not in an upright orientation (as shown in Fig. 5), but is instead on its side (e.g., as shown in Fig. 7), the first direction 544 is parallel to the ground, i.e., horizontal. Unless stated otherwise, a feature being directed in the first, second, and third direction can also mean parallel or antiparallel to the first, second, and third direction, respectively.

The transverse struts 504 of the first set have vehicle rails or tracks running along the length of the struts (not shown), according to the rails or tracks as described above with reference to Fig. 1 to Fig. 4, or rail attachment portions for attaching vehicle rails or tracks. When the storage frame module is connected to other similar storage frame modules, the vehicle rails or tracks link up to provide the rail system for container-handling vehicles to traverse. The container-handling vehicles can then store and retrieve storage containers from stacks in the compartments 512.

The base 522 comprises a first set of guide slots 532 that each function as an alignment portion and a connection portion. The guide slots 532 are located on a side of the base 522, i.e., at a periphery of the base, facing outwards from the base. One guide slot is provided below each longitudinal strut 502 around the periphery of the base 522. The guide slots 532 are configured to receive a guide insert that can be used to guide the alignment and spacing of the base 522 with adjacent bases of other storage frame modules for assembling into a modular automated storage and retrieval system.

The transverse struts 504 running around the periphery of the grid have a second set of guide slots 534 that each function as a grid alignment portion and a grid connection portion. Analogously to the first set of guide slots 532, the guide slots 534 of the second set are each provided above a longitudinal strut 502 around the periphery of the grid. The guide slots 534 are configured to receive a guide insert that can be used to guide the alignment and spacing of the grid with adjacent grids of other storage frame modules for assembling into a modular automated storage and retrieval system.

The guide slots 532, 534 of the first set and the second set can connect to guide inserts inserted therein using any suitable connection, e.g., nuts and bolts, screws and screw holes, hooks, welds, etc. or a combination thereof.

The longitudinal struts 502 comprise holes 540 that function as lifting portions for the storage frame module. The holes are located near the top and bottom of each longitudinal strut. A lifting device can connect to one or more of the holes 540 to lift or rotate the storage frame module. For example, a hook may be inserted into, or a bolt connected to or through, two or more holes across one side of the storage frame module. The holes 540 in the longitudinal struts are strong enough to withstand the weight of the storage frame module such that the module can be suspended from one or more of the holes 540, the number of holes needed depending on the circumstance. To rotate the storage frame module, a lifting device can be connected to multiple holes 540 on one side of the storage frame module, e.g., at four corners of a single face. When the lifting device lifts the storage frame module, the module will rotate until it hangs from the holes 540. When the lifting device lowers the storage frame module, it will come to rest of a different side compared to the side it started on. In another example, two lifting devices can be attached to opposite sides of the storage frame module such that, as one lifting device is retracted and the opposite lifting device let out, the storage frame rotates towards the side of retracting lifting device. Tension in the lifting device being let out will control the amount and speed of rotation.

The connections between longitudinal struts and the first set of transverse struts or the base 522, or between transverse struts can be any suitable mechanical connection, e.g., including bolts and nuts, screws and screw holes, clamps, hooks, welds, etc. or a combination thereof.

The longitudinal struts 502 and transverse struts 504 may be made of any suitable material for a particular implementation. For example, the struts may comprise aluminium or steel. The base 522 may be made from aluminium, steel, reinforced plastic, or a composite material, according to the level of strength needed to support the longitudinal struts 502 when the storage frame module is on its side, i.e., the first direction 554 is parallel to the ground.

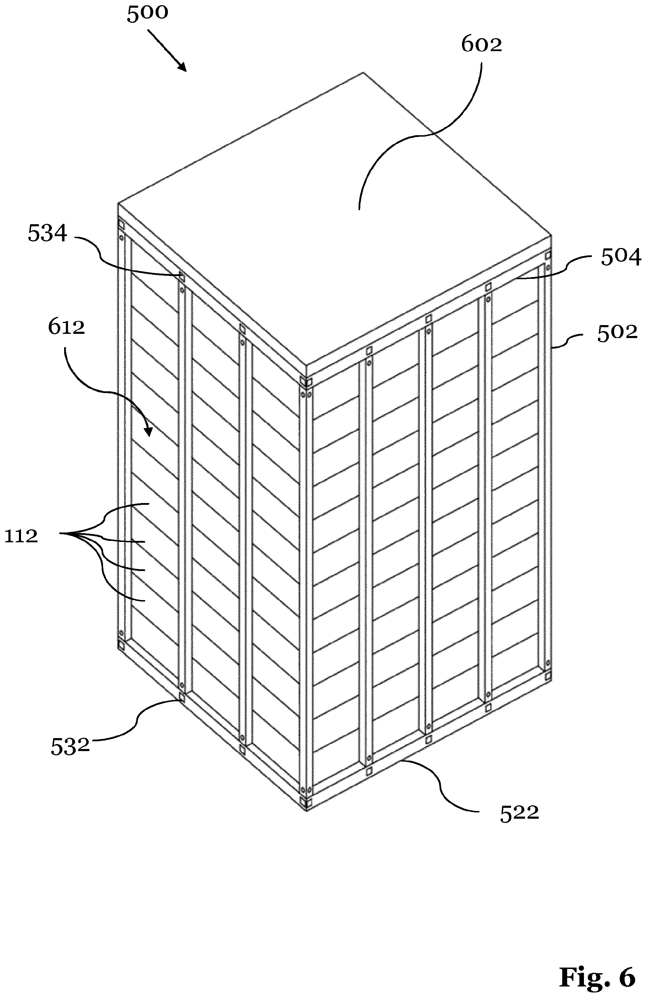

With reference to Fig. 6, a storage frame module 500 as described above with reference to Fig. 5 comprises twelve stacks 612 of storage containers 112 (also referred to herein as 'bins'). A stack 612 of twelve bins 112 is positioned in each compartment 512 of the storage frame module 500, below the corresponding access opening.

A cover 602 covers the first set of transverse struts 504 and the access openings, thereby functioning as a stack stopper. The cover 602 is releasably connected to the first set of transverse struts 504 by any suitable connection, e.g., nuts and bolts, screws and screw holes, clamps, clips, etc., or a combination thereof. The cover holds the stack 612 of bins 112 in place even if the storage frame module is positioned on its side, i.e., with the longitudinal struts 502 parallel to the ground, stopping the bins 112 from falling out of the compartments. After the bins 112 have been loaded into the storage frame module, the cover 602 is attached onto the grid for transport (which may include rotating the storage frame module onto its side). After the storage frame module is at the construction site of the automated storage and retrieval system and the storage frame module is rotated upright (with the stacks arranged vertically), the cover 602 can be removed to allow the module to function as part of the system.

The cover 602 may comprise a spring-loaded mechanism (not shown) extending through each access opening to provide a force on the bin 112 at the end of the stack 612 nearest the grid, the force being parallel to the first direction 554, i.e., in the direction of the longitudinal struts.

In some examples, the force on the top of the stack is enough to brace the stack 612 against the base 522 in the first direction such that lateral movement of the stack 612 of bins 112 is prevented, even when a force is applied to the stack of bins in a direction perpendicular to the first direction 554 (i.e., in the second or third direction).

With reference to Fig. 7, a storage frame module 500 arranged such that the first direction 554 of the storage frame module 500 is parallel to the ground. In other words, the storage frame module 500 is arranged on its side, also referred to herein as a 'first orientation' wherein the longitudinal struts are horizontal.

The storage frame module 500 rests on one side of the base and the longitudinal struts connected to the base along that side of the base. The cover 602 holds the stacks 612 of bins 112 into their respective compartments. The stacks 612 each rest on one or more storage container supports for supporting the weight of the stack perpendicular to the first direction, thereby supporting the stacks in their respective compartments.

The storage frame module 500 is positioned inside a shipping container 702, which is an example of a transportation container. Accordingly, the storage frame module 500 has external dimensions less than the internal dimensions of the shipping container 702. The internal dimensions of the shipping container 702 are approximately 5.9m in the first direction 554, 2.4m in the second direction 556 and 2.4m in the third direction 558, according to the international standard ISO 668 for shipping containers ('20 foot'). The side panel of shipping container 702 is not shown in Fig. 7 for illustration. The shipping container 702 may have a removable side panel. The storage frame module 500 may be positioned in the shipping container 702 via a side opening or via a door of the shipping container 702.

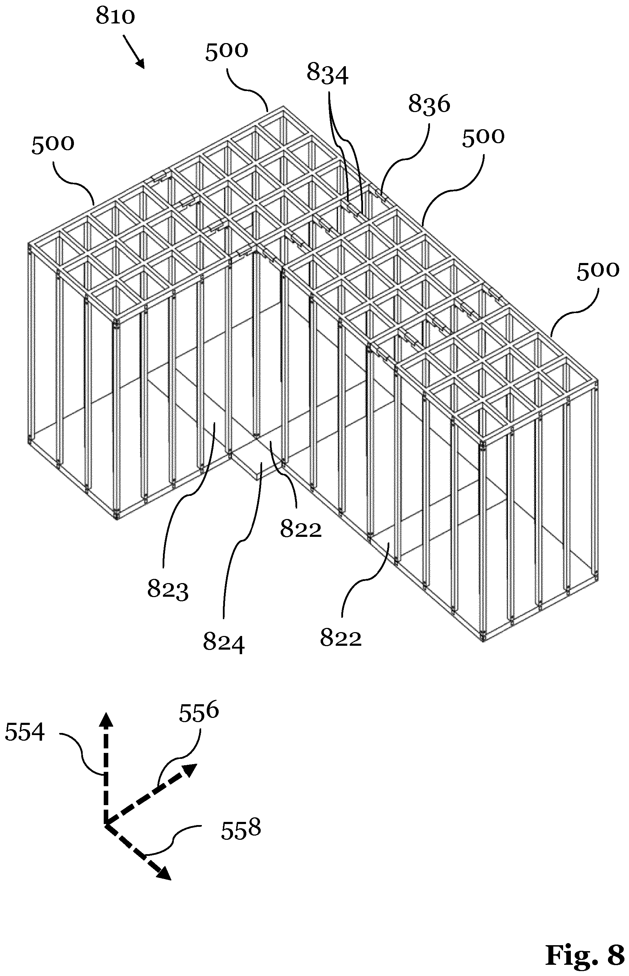

With reference to Fig. 8, four storage frame modules 500 are arranged adjacently (i.e., forming a continuous area) into a storage frame 810 for an automated storage and retrieval system.

The storage frame modules 500 are arranged in an upright orientation (a 'second orientation') and aligned in a rectangular array. Between the bases 522 of adjacent storage frame modules 500, spacer bases 822, 823 are arranged, having a width corresponding to the width of a compartment in the direction that the space base lies between adjacent bases. In particular, a first spacer base 822 lies between adjacent bases in the third direction 558 and has a width of a compartment in the third direction. A second spacer base 823 lies between adjacent bases in the second direction 556 and has a width of a compartment in the second direction. As the access openings as shown in Fig. 8 are wider in the third direction 558 than in the second direction 556, the first spacer bases 822 are wider than the second spacer base 823. The lengths of first and second spacer bases 822, 823 match the widths of a storage frame module 500 in the second and third directions 556, 558, respectively. A third spacer base 824 has the dimensions in the second and third directions equal to the footprint of a single compartment, i.e., the area under an access opening. The third spacer base 824 is positioned where two or more spacer bases 822, 823 meet, i.e., where three or more storage frame modules 500 meet, filling in the gap to create a continuous storage frame base. The heights of the first, second, and third spacer bases 822, 823, 824 match the height of the bases of the storage frame modules.

The first and second spacer bases 822, 823 comprise guide inserts protruding from either side of the widths of the spacer bases. The guide inserts are shaped to complement the guide slots 532 around the periphery of the base 522 of each storage frame module. The guide slots 532 and guide inserts are made to ensure the proper alignment between the storage frame modules 500 when combined into a storage frame 810, such that the spacing between adjacent compartments and access openings is constant across the storage frame. The guide inserts may be configured to connect to the bases of adjacent storage frame modules 500 according to any suitable connection means, e.g., nuts and bolts, screws and screw holes, clips, clamps, welds, etc. or a combination thereof.

The first set of transverse struts forming a grid at the top of each respective storage frame module 500 is aligned and connected to the grids of adjacent storage frame modules 500 via a similar mechanism to the alignment and connection at the base. In particular, guide inserts 834 are positioned in guide slots 534 in the transverse struts 504 to align and connect the grids of transverse struts 502 of adjacent storage frame modules 500. Each pair of opposing guide inserts 834, on either side of a gap between adjacent storage frame modules support a bridging section 836. The guide inserts 834 and the bridging section 836 together fit together to ensure the correcting spacing between adjacent storage frame modules 500, such that the spacing between adjacent compartments and access openings is constant across the storage frame 810. The bridging section 836 and guide inserts may be rail sections to connect the rails or tracks on grids of adjacent storage frame modules 500. The guide inserts may be configured to connect to the transverse struts of adjacent storage frame modules 500 according to any suitable connection means, e.g., nuts and bolts, screws and screw holes, clips, clamps, welds, etc. or a combination thereof.

The storage frame 810 comprising multiple storage frame modules 500 can be used in a automated storage and retrieval system (also referred to herein as a 'modular automated storage and retrieval system'), having a rail system arranged across the top of the first set of transverse struts and container-handling vehicles moving across the rail system on the continuous grid formed by the storage frame modules 500. The automated storage and retrieval system otherwise can have the features described above with reference to Fig. 1 to Fig. 4, including any variants thereof. For example, the automated storage and retrieval system may have transfer columns, access columns, port columns, packing stations, etc. for inputting or receiving bins 112 to and from the container-handling vehicles on the storage frame.

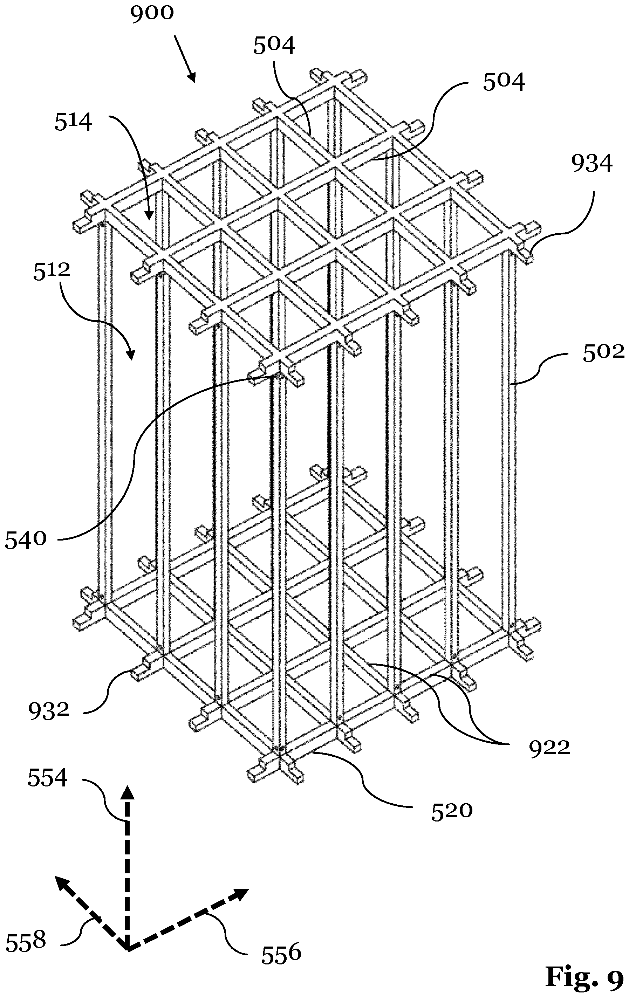

With reference to Fig. 9, a storage frame module 900, according to an alternative arrangement compared to the storage frame module as described above with reference to Fig. 5, has longitudinal struts 502, a first set of transverse struts 504, compartments 512, access openings 514, holes 540 that function as lifting portions, and a cover 602, as described above with reference to Fig. 5 to Fig. 8. However, instead of a base as described reference to Fig. 5 to Fig. 8, the storage frame module 900 has a transverse support structure 520 in the form of a second set of transverse struts 922. The second set of transverse struts 922 form a grid across a lower end of the longitudinal struts 502 (when in an upright orientation, also referred to as the 'second orientation'). The second set of transverse struts 922 separate the compartments 512 of the storage frame module 900 at ends of the longitudinal struts opposite the grid of the first set of transverse struts 504. The second set of transverse struts 922 therefore define additional access openings to the compartments.

At each end of the first set of transverse struts 504 and each end of the second set of transverse struts 922, the transverse struts extend beyond the periphery of their grids. The portions 932, 934 of the transverse struts that extend beyond the periphery of the grids each function as an alignment portion and a connection portion. The alignment portions are configured to align the first and second sets of transverse struts with first and second sets of transverse struts of an adjacent storage frame module 900, to ensure proper alignment and spacing between storage frame modules 900. The alignment portions 932, 934 are configured to receive a bridging section 936 in a similar manner to guide inserts 834 and bridging sections 836 as described above with reference to Fig. 8. The alignment portions 934 comprise a step on which the bridging section 936 fits to align and space opposing alignment portions of adjacent storage frame modules 900.

With reference to Fig. 9, the storage frame module 900 has first alignment portions 934 for the first set of transverse struts 504 and second alignment portions 932 for the second set of transverse struts 922. In other examples, alignment portions may only be required at the top or bottom of the storage frame module 900.

The alignment portions 932, 934 may connect to alignment portions of an adjacent storage frame module 900, e.g. via a bridging section 936, according to any suitable connection means, e.g., nuts and bolts, screws and screw holes, clips, clamps, welds, etc. or a combination thereof.

In some examples, the storage frame module 900 may have a second cover that connects to the second set of transverse struts 922. The second cover may have any of the features described regarding the first cover 602 with reference to Fig. 6.

The storage frame module 900 may be arranged such that the first direction 554 of the storage frame module 900 is parallel to the ground. In other words, the storage frame module 900 is arranged on its side, also referred to herein as a 'first orientation' wherein the longitudinal struts 502 are horizontal. In this orientation, the storage frame module 900 rests on the ends of transverse struts 504, 922 on one side of grids at either end of the longitudinal struts. If the storage frame module 900 contains stacks of bins, one or more cover may hold the stacks of bins into their respective compartments and the stacks may each rest on one or more storage container supports for supporting the weight of the stack perpendicular to the first direction, thereby supporting the stacks in their respective compartments. In another example, the storage frame module 900 rests on one or more stand arranged to support the storage frame module 900 in the first orientation on its side. For example, the one or more stand may define slots or grooves to support longitudinal struts 502 or transverse struts 922 on the lower side of the storage frame module 900 when in the first orientation. The one or more stands may comprise slots for receiving the alignment portions 932, 934 at the end of transverse struts 504, 922.

The storage frame module 900 can be positioned in a shipping container 702 according to any of the features of the storage frame module 500 and shipping containers described above with reference to Fig. 7.

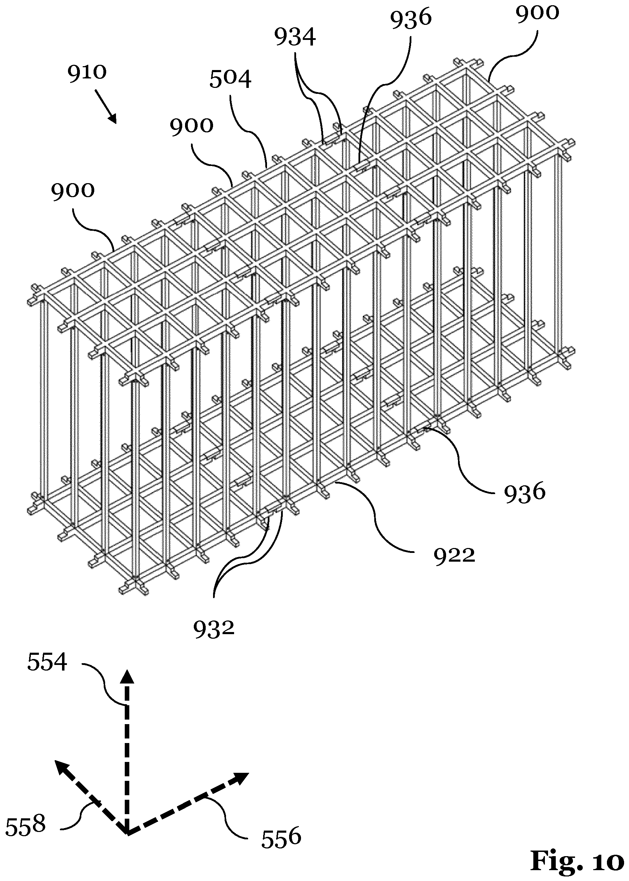

With reference Fig. 10, three storage frame modules 900 are arranged adjacently (i.e., forming a continuous area) into a storage frame 910 for an automated storage and retrieval system.

The storage frame modules 900 are arranged in an upright orientation (a 'second orientation') and aligned in a rectangular array. Adjacent storage frame modules 900 are spaced to create additional compartments, having a width corresponding to the width of a compartment in the direction between adjacent storage frame modules. For example, the spacing between storage frame modules in the second direction 556 provides compartments between adjacent storage frame modules having the same width in the second direction as compartments within a storage frame module, as shown in Fig. 10. Likewise, the spacing in between storage frame modules in the third direction 558 (not shown in Fig. 10) creates compartments having a width that matches the width of compartments in the third direction 558. In this way, additional compartments are also created between the corners of four storage frame modules 900.

Each pair of alignment portions 932, 934 on either side of a gap between adjacent storage frame modules 900 supports a bridging section 936. The alignment portions at the end of transverse struts 504, 922 and the bridging sections 836 together fit together to ensure the correcting spacing between adjacent storage frame modules 900, such that the spacing between adjacent compartments and access openings is constant across the storage frame 910. As such, the bridging sections 936 for aligning and connecting adjacent storage frame modules 900 in the second direction 556 may have a different length to the bridging sections 936 for aligning and connecting adjacent storage frame modules 900 in the third direction 558 according to the size and shape of the access openings of the grid. The bridging sections 936 may be rail sections to connect the rails or tracks on grids of adjacent storage frame modules 900.

The alignment portions may be configured to connect to the bridging sections according to any suitable connection means, e.g., nuts and bolts, screws and screw holes, clips, clamps, welds, etc. or a combination thereof.

The storage frame 910 comprising multiple storage frame modules 900 can be used in a automated storage and retrieval system (also referred to herein as a `modular automated storage and retrieval system'), having a rail system arranged across the top of the first set of transverse struts and container-handling vehicles moving across the rail system on the continuous grid formed by the storage frame modules 900. The automated storage and retrieval system otherwise can have the features described above with reference to Fig. 1 to Fig. 4, including any variants thereof. For example, the automated storage and retrieval system may have transfer columns, access columns, port columns, packing stations, etc. for inputting or receiving bins 112 to and from the container-handling vehicles on the storage frame.

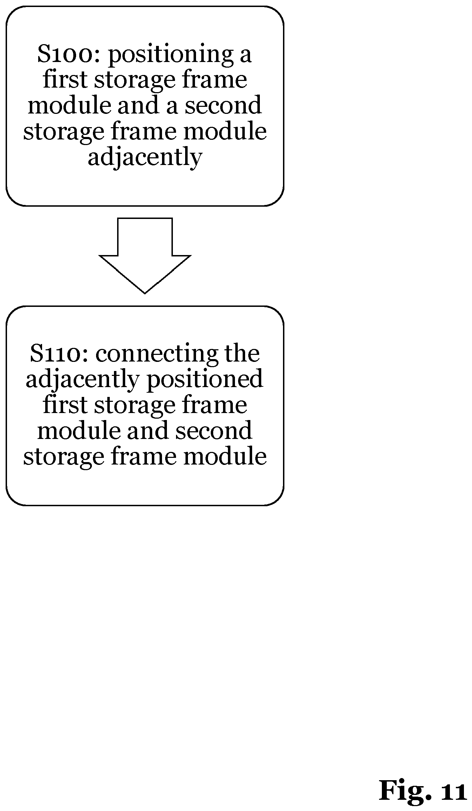

With reference to Fig. 11, a method of assembling an automated storage and retrieval system comprises positioning S100 positioning a first storage frame module and a second storage frame module adjacently; and connecting S110 the adjacently positioned first storage frame module and second storage frame module. The first and second storage frame modules may be according to any of the examples described above with reference to Fig. 5 to Fig. 10, or variants thereof as described herein.

In some examples, the method comprises unloading the first (and/or the second) storage frame module from a shipping container, such as described above with reference to Fig. 7, while the storage frame module is in the first configuration on its side. The unloading may include removing a panel of the shipping container, or opening a door of the shipping container and pulling or lifting the storage frame module out of the shipping container. The unloading may be performed with one or more of: a crane or other lifting device, a winch, a trolley positioned under the storage frame module, one or more sets of wheels mounted on the storage frame module. The unloading may handle the storage frame module from one or more of the lifting portions, e.g. holes 540.

In some examples, the method comprises rotating the storage frame module from the first orientation, wherein the longitudinal struts 502 are parallel to the ground (the module being on its side), to the second orientation wherein the longitudinal struts 502 are perpendicular to the ground (the module being upright). The rotating may comprise connecting a module handling device at one or more lifting portions of the storage frame module, e.g. at holes 540, and lifting or pulling the storage frame module at one end of the longitudinal struts while the other end of the storage frame module is supported or held in place, thereby generating a torque to rotate the storage frame module. Any suitable construction lifting device can function as module handling device, such as one or more of: a crane, a winch, a pulley, or some combination thereof. The rotating may be before the positioning S100.

During unloading and/or rotation, the transverse support structure maintains the structure and shape of the storage frame module by supporting the weight of the longitudinal struts in a direction perpendicular to the first direction. As such, all the ends of the longitudinal struts opposite the ends at the grid of the first set of transverse struts are held in place without deformation along the length of the longitudinal struts due to their weight.

Although particular implementations of the disclosure have been described above with reference to the Fig. 5 to Fig. 11, alternative implementations are also possible, some examples of which are explained below.

In some implementations, the storage frame module has a number of access openings, and corresponding compartments, in the grid defined by the first set of transverse struts other than 3 x 4 as described above. For example, the storage frame module may be a 2 x 3 module (having six compartments per module), a 3 x 3 module, a 4 x 4 module, a 3 x 5 module, a 4 x 5 module, a 5 x 5 module, etc. The shape and dimensions of the access openings may also be different in different implementations according to the desired storage and retrieval system to be made.

In some implementations, the relative and absolute dimensions of the storage frame module is different to the examples described above with reference to Fig. 5 to Fig. 11. For example, the longitudinal struts may be shorter than the transverse struts.

In some implementations, the transverse support structure has neither a base nor a second set of transverse struts arranged in a grid, or a combination of both, or a combination of either with an alternative structure. For example, the second set of transverse struts may be all parallel to only one of the second direction and third direction. As such the transverse support structure would only support the weight of the longitudinal struts in the second direction or third direction, respectively.

In some implementation, the second set of transverse struts functioning as a transverse support structure are arranged diagonally across the ends of the longitudinal struts.

In some implementations, lifting portions on the storage frame module may comprise one or more of loops, brackets, hooks, through-holes, or a combination thereof.

In some implementations, stack stoppers are provided, additionally or alternatively to at the access openings, at intermediate portions along the length of the longitudinal struts. For example, a first stack stopper may hold a portion of a stack of bins halfway along a compartment, with another stack stopper holding a portion of the stack separated from the rest of the stack by the first stack stopper. For example, the stack stoppers may comprise slides or shelves that can be inserted through the compartments in a direction perpendicular to the first direction (i.e., perpendicular to the longitudinal struts). The stack stoppers are removable after transportation to allow the bins in the stack to be retrieved via the access opening.

In some implementations, the longitudinal struts of the plurality of longitudinal struts comprise storage container supports for supporting a weight of a stack of storage containers perpendicular to the first direction. When the storage frame module is positioned on its side, i.e., with the longitudinal struts parallel to the ground in the first orientation, the stacks of storage containers rest on the storage container supports. Accordingly, the storage container supports keep each stack of storage containers in its compartment. The storage container supports may be one or more flange extending away from the longitudinal strut in a direction perpendicular to the first direction and perpendicular to the direction in which the flange can support the weight of the stack of storage containers. The one or more flange may be continuous along the length of the longitudinal struts or a plurality of flanges spaced along the length of the longitudinal struts. The storage container supports may be one or more transverse braces arranged parallel to the transverse struts to prevent the stack of storage containers from leaving the compartments in a direction perpendicular to the first direction. The one or more transverse braces may separate each compartment from adjacent compartments and surround the peripheral compartments so that a stack of storage containers cannot leave its compartment. The one or more transverse braces may be provided at multiple positions along the length of the longitudinal struts to provide support for stacks of bins. In some implementations, the storage container supports are not needed, e.g. if the storage frame module is not intended to be transported with bins pre-loaded.

In some implementations, a shipping container is used to transport the storage frame module that differs from the shipping container described above with reference to Fig. 7. For example, a '40-foot' shipping container may be used, in which case the storage frame module may have approximately double the height, corresponding to double the length of the longitudinal struts, compared to the storage frame modules described above with reference to Fig. 5 to Fig. 10.

In some implementations, the storage frame module has fewer alignment portions or connection portions than is described above with reference to Fig. 5 to Fig. 10. For example, in some implementations, the storage frame module has one, two, or two or more alignment portions on each side of the storage frame module. In some implementations, the alignment portions are for alignment only. In some implementations, only connection portions are provided without alignment portions, e.g. if alignment is performed by other means. In some implementations, the alignment portions have a different shape or size compared to the guide slots, guide inserts, bridging sections, ends of transverse struts, as described above with reference to Fig. 5 to Fig. 10. For example, the alignment portions may be markings, connection points, guide rods, etc. or some combination thereof.

In some implementations, the guide inserts can align directly with both adjacent storage frame modules without a bridging section.

In some implementations, the ends of the transverse struts can align and/or connect directly to ends of transverse struts of the adjacent storage frame module.

In some implementations, the guide slots at corners of the storage frame module are offset in positioning, e.g. positioned at different heights, to provide space for guide inserts to be inserts from both sides of the corner.

In some implementations, spacers other spacer bases are provided between adjacent storage frame modules, e.g., rods, meshes, frames, etc. or a combination thereof.

In some implementations, the protruding ends of the transverse struts used as alignment portions can be at one end of the storage frame module (e.g., as described with reference to Fig. 9) when there is a base at the other end, or some other combination of features from the storage frame modules as described above with reference to Fig. 5 to Fig. 8 and the storage frame modules as described above with reference to Fig. 9 and Fig. 10.

Implementations of the disclosure have been described in the above by way of example with reference to the drawings. The present disclosure will now be described in general terms below. The word "may" is used to refer to a feature that is optional, i.e., in some implementations of the disclosure, the feature is present, and in some implementations of the disclosure, the feature is not present. Each possible combination of any features described below with any features described above also forms part of the disclosure.

The present disclosure provides a storage frame module for a modular automated storage and retrieval system, the modular storage and retrieval system comprising the storage frame module and a plurality of other storage frame modules. The storage frame module is configured to connect to one or more of the plurality of other storage frame modules of the modular automated storage and retrieval system.

The storage frame module comprises a plurality of longitudinal struts arranged parallel to a first direction. The plurality of longitudinal struts defines a plurality of compartments for receiving a stack of storage containers in the first direction.

The storage frame module comprises a first set of transverse struts connected to the plurality of longitudinal struts at a first end of each longitudinal strut. The transverse struts of the first set are arranged perpendicular to the first direction. The first set of transverse struts forms a grid defining a plurality of access openings for passing the stack of storage containers through to access the plurality of compartments.

The storage frame module comprises a transverse support structure connected to the plurality of longitudinal struts. The transverse support structure is configured to support a weight of the plurality of longitudinal struts perpendicular to the first direction.

By supporting a weight of the longitudinal struts (e.g., the weight of all or substantially all of the longitudinal struts that are not directly resting on the ground) the storage frame module is free-standing when resting on its side, i.e., with the longitudinal struts parallel to the ground. In other words, the transverse support structure supports the weight of the longitudinal struts transverse to the length of the longitudinal struts. The transverse support structure maintains the structure of the storage frame module in at least one orientation (but optionally all orientations) when a gravitational force is experienced from the side. The transverse support structure may maintain the structure of the storage frame module regardless of orientation of the storage frame module with respect to a gravitational force (e.g., from either side transverse to the longitudinal struts). When used as part of an automated storage and retrieval system, the longitudinal struts are arranged vertically (with the stacks of storage containers upright). However, the transverse support structure allows the storage frame module to be stored or transported on its side, making it more suitable for being constructed before transporting it to a build site for connecting with other storage frame modules into a modular automated storage and retrieval system.

Each compartment of the plurality compartments may be defined as the cuboid volume between an access opening and the opposite ends of the longitudinal struts positioned at the corners of the access opening, with a cross-sectional shape and area of the cuboid volume being the same as the access opening.

The grid may be a 3x4 grid, comprising 12 access openings and 12 compartments.

The transverse support structure may comprise a base connected to the plurality of longitudinal struts at a second end of each longitudinal strut.

The base may comprise an alignment portion located at a periphery of the base configured to align the base with an adjacent base of an adjacent storage frame module. The alignment portion provides a way to accurately align storage frame modules to create a row of compartments and access openings between storage frame modules having a size and shape consistent with the rest of the storage frame modules. The accurate alignment also keeps tracks on rails on top of the grid straight across the join between adjacent storage frame modules.

The base may comprise a connection portion located at the periphery of the base configured to connect the base to the adjacent base. The connection portion may be the same part or a different part as the alignment portion.

The alignment portion and/or the connection portion may comprise a slot for receiving a guide insert. The guide insert may be configured to connect to a respective base at each end of the guide insert. The guide insert may be configured to control the spacing between bases. The guide insert may be configured to connect to each of the bases.

The storage frame module may comprise a grid alignment portion located at a periphery of the grid and configured to align the grid with an adjacent grid of an adjacent storage frame module. The storage frame module may comprise a grid connection portion located at a periphery of the grid and configured to connect the grid with an adjacent grid of an adjacent storage frame module. The grid alignment portion and the grid connection portion may have any of the features as the alignment portion and connection portion described above for the base.

The base may comprise a storage container platform configured to support the stack of storage containers in the first direction, wherein the storage container platform spans a cross-sectional area of the plurality of compartments. Accordingly, in use as part of an automated storage and retrieval system, the base supports stacks of surface containers in the compartments. The base provides a level surface, perpendicular to the longitudinal struts so that the stacks and longitudinal struts are aligned for the length of the compartments.

The base may comprise three or more adjustable feet for levelling the base. The base may comprise four adjustable feet for levelling the base. Each of the adjustable feet may be positioned at a respective corner of the base. Adjusting the adjustable feet allows the base to be set level to the ground and level with adjacent storage frame modules. Having a level base on which stacks of storage containers sit provides a more stable system. As the base spans multiple compartments, the floor of each compartment can be set level with only one set of levelling adjustments.

The transverse support structure may comprise a second set of transverse struts, wherein the transverse struts of the second set are arranged perpendicular to the first direction. The second set of transverse struts may all be parallel to a second direction (perpendicular to the first direction) for supporting the weight of the longitudinal struts in the second direction. The first set of transverse struts may form a support grid (i.e., with some transverse struts arranged parallel to a second direction perpendicular to the first direction and some transverse struts arranged parallel to the third direction that is perpendicular to both the first direction and the second direction). The support grid may define a plurality of openings aligned with each of the access openings in the grid formed by the plurality of transverse struts (which may be referred to a first set of transverse struts). The second set of transverse struts provides a relatively low-weight transverse support structure. The second set of transverse struts leaves the ends of the longitudinal struts opposite the first set of transverse struts free to meet design requirements of the automated storage and retrieval system (e.g., having an adjustable foot on each longitudinal struts). The transverse struts of the second set may be connected to the plurality of longitudinal struts at a support position, wherein a distance between the support position and the first end of each longitudinal strut is at least half of a length of the longitudinal strut. In other words, the support grid may be closer to the ends of the longitudinal struts opposite the grid and access openings than the ends next to the grid and access openings. Positioning the second set at least halfway along the longitudinal struts provides design choices according to the required implementation while maintaining a robust support for the longitudinal struts when the storage frame module is on its side.

The storage frame module may comprise a stack stopper configured to releasably hold one or more stack of storage containers into one or more compartment of the plurality of compartments. The stack stopper allows a stack of storage containers to be stored securely in the storage frame module even when the storage frame module is on its side or in transport.

The stack stopper may be configured to releasably attach to the plurality of longitudinal struts and/or the first set of transverse struts. When preparing for rotation or transport, the stack stopper can be attached to struts to hold stacks of storage containers in place. When preparing for assembling storage frame modules into a modular storage frame, the stack stopper can be released. The stack stopper may be attachable at multiple positions along the longitudinal struts to secure stacks of different numbers of storage containers.

The stack stopper may comprise a cover for covering the access openings of the one or more compartment. The cover requires fewer connections to hold in place, while securing stacks of storage containers in many compartments, compared to separate stack stoppers for each compartment. The stack stopper may comprise a spring-loaded pusher to hold the one or more stack of storage containers into the one or more compartment. The pusher provides a securing force to any stack independent of the exact number of storage containers in the stack.

The longitudinal struts of the plurality of longitudinal struts may comprise storage container supports for supporting a weight of a stack of storage containers perpendicular to the first direction. When the storage frame module is positioned on its side, i.e., with the longitudinal struts parallel to the ground, the stacks of storage containers rest on the storage container supports. Accordingly, the storage container supports keep each stack of storage containers in its compartment. The storage container supports may be one or more flange extending away from the longitudinal strut in a direction perpendicular to the first direction and perpendicular to the direction in which the flange can support the weight of the stack of storage containers. The one or more flange may be continuous along the length of the longitudinal struts or a plurality of flanges spaced along the length of the longitudinal struts. The storage container supports may be one or more transverse braces arranged parallel to the transverse struts to prevent the stack of storage containers from leaving the compartments in a direction perpendicular to the first direction. The one or more transverse braces may separate each compartment from adjacent compartments and surround the peripheral compartments so that a stack of storage containers cannot leave its compartment.

The storage frame module may comprise one or more stack of storage containers in the plurality of compartments. The storage frame module with one or more stacks of storage containers is therefore pre-loaded with storage containers and a lengthy process of inserting the storage containers is not required once the storage frame is assembled from the storage frame modules, reducing the on-site construction time.

The storage frame module may comprise a rail network section positioned on the grid of the first set of transverse struts. The storage frame module with the rail network section avoids the process of attaching rails to the grid, reducing on-site construction time. The rail network section may be releasably connected to the grid.

The transverse support structure may be releasably connected to the plurality of longitudinal struts. The transverse support structure may be required only for transportation of storage frame modules. Therefore, having a releasable transverse support structure provides the storage frame module with more design choices according to the required implementation without needing to accommodate the transverse support structure while operating the assembled storage frame and an automated storage and retrieval system that it is a part of.

The storage frame module may have: a first dimension no more than 12 metres in the first direction; a second dimension no more than 3 metres perpendicular to the first direction; and a third dimension no more than 3 metres perpendicular to the first direction and to the second dimension. The storage frame module may have: a first dimension no more than 6 metres in the first direction; a second dimension no more than 3 metres perpendicular to the first direction; and a third dimension no more than 3 metres perpendicular to the first direction and to the second dimension. As is conventional, the second dimension and the third dimensions are measured in perpendicular directions. Accordingly, the three dimensions define a cuboid volume which the storage frame module is entirely within. The storage frame module may have: a first dimension no more than 5.8 metres in the first direction; a second dimension no more than 2.3 metres perpendicular to the first direction; and a third dimension no more than 2.3 metres perpendicular to the first direction and to the second dimension. The storage frame module may have: a first dimension no more than 11.6 metres in the first direction; a second dimension no more than 2.3 metres perpendicular to the first direction; and a third dimension no more than 2.3 metres perpendicular to the first direction and to the second dimension.

The storage frame module may be configured to fit inside a shipping container. The storage frame module may be configured to fit inside a shipping container according to ISO 668 (e.g., ISO 668:2020 or any other version of ISO 668), for example a '20 foot' shipping container (ISO designation 1C, 1CC, or 1CCC) or a '40 foot' shipping container (ISO designation 1A, 1AA, or 1AAA). The storage frame module having the appropriate size allows for manufacture of the module away from the site of assembling storage frame modules into the storage frame and constructing the automated storage and retrieval system. The storage frame modules, which may also include the storage containers pre-loaded, can then be put in the shipping container for transportation to the site for assembly, which reduces the time of on-site construction. Fewer construction faults will occur because more of the construction happens away from the site of the automated storage and retrieval system, e.g., at a dedicated storage frame module factory.

The storage frame module may comprise one or more lifting portion configured to be attached to a lifting device for lifting the storage frame module. The lifting portions provide parts for the storage frame module to handled, for example: lifted into or out of a shipping container; moved to position for connecting to an adjacent storage frame module; or rotated onto its side or rotated upright. The lifting device may comprise a lifting cable, a lifting winch, a crane, and/or a lifting hook.

The storage frame module may comprise a set of wheels for rolling the storage frame module across a surface. The set of wheels allow the storage frame module to be handled, for example, rolled into or out of a shipping container or moved to position for connecting to an adjacent storage frame module. The set of wheels may be positioned at either end of longitudinal struts and/or along a length of the longitudinal struts. The set of wheels may be configured to support the storage frame module in a direction perpendicular to the first direction. In this way, having wheels on the side of the storage frame module, the storage frame module can be wheeled while on its side (having the longitudinal struts parallel to the ground).

The present disclosure provides an automated storage and retrieval system comprising a storage frame, the storage frame comprising two or more storage frame modules according to any of the features described above, wherein the two or more storage frame modules are connected together. The automated storage and retrieval system comprises a plurality of container-handling vehicles configured to store and retrieve the storage containers into and out of the storage frame through the access openings. The automated storage and retrieval system comprises a rail system arranged across the first set of transverse struts, wherein the rail system comprises rails arranged to guide movement of the container-handling vehicles across the storage frame.

The automated storage and retrieval system can be assembled on its construction site in a shorter construction time by using storage frame modules instead of assembling the storage frame from all the struts individually.

The automated storage and retrieval system has fewer construction faults, or greater assurance of correct construction, because few connections are performed on site.

The present disclosure provides a method of assembling an automated storage and retrieval system, the method comprising: positioning a first storage frame module according to any of the features described above and a second storage frame module adjacently; and connecting the adjacently positioned first storage frame module and second storage frame module.

The method requires less on-site construction time due to using the storage frame modules. When the storage frame modules comprise the stacks of storage containers pre-loaded, the method also avoids or reduces the process of initialising the system with storage containers.

The method may comprise rotating the first storage frame module from a first orientation wherein the longitudinal struts are horizontal to a second orientation wherein the longitudinal struts are vertical; and/or rotating the first storage frame module from a second orientation wherein the longitudinal struts are vertical to a first orientation wherein the longitudinal struts are horizontal. Rotating the storage frame module allows it to be put in a suitable orientation for transportation, e.g., in a shipping container, and then returned to an orientation for assembly. This is possible because of the transverse support structure supporting the weight of the longitudinal struts while in a horizontal orientation (i.e., the 'first orientation').

The method may comprise loading the first storage frame module into a transportation container; and/or removing the first storage frame module from a transportation container. The method may comprise transporting the first storage frame module to an assembly site in the transportation container. Transporting a storage frame module allows the storage frame modules to arrive at the construction site at a more advanced state of construction.

The present disclosure provides a method of handling a storage frame module according to any of the features described above, the method comprising rotating the first storage frame module from a first orientation wherein the longitudinal struts are horizontal to a second orientation wherein the longitudinal struts are vertical; and/or rotating the first storage frame module from a second orientation wherein the longitudinal struts are vertical to a first orientation wherein the longitudinal struts are horizontal. The method of handling may comprise any other method feature as described above.

Rotating the storage frame module allows it to be put in a suitable orientation for transportation, e.g., in a shipping container, and then returned to an orientation for assembly.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A storage frame module for a modular automated storage and retrieval system comprising the storage frame module and a plurality of other storage frame modules, the storage frame module configured to connect to one or more of the plurality of other storage frame modules of the modular automated storage and retrieval system, the storage frame module comprising:
a plurality of longitudinal struts arranged parallel to a first direction, wherein the plurality of longitudinal struts define a plurality of compartments for receiving a stack of storage containers in the first direction;
a first set of transverse struts connected to the plurality of longitudinal struts at a first end of each longitudinal strut, wherein the transverse struts of the first set are arranged perpendicular to the first direction, wherein the first set of transverse struts forms a grid defining a plurality of access openings for passing the stack of storage containers through to access the plurality of compartments; and
a transverse support structure connected to the plurality of longitudinal struts, the transverse support structure configured to support a weight of the plurality of longitudinal struts perpendicular to the first direction.

2. The storage frame module according to claim 1, wherein the transverse support structure comprises a base connected to the plurality of longitudinal struts at a second end of each longitudinal strut.

3. The storage frame module according to claim 2, wherein the base comprises an alignment portion located at a periphery of the base configured to align the base with an adjacent base of an adjacent storage frame module.

4. The storage frame module according to any of claims 2 or 3, wherein the base comprises a storage container platform configured to support the stack of storage containers in the first direction, wherein the storage container platform spans a cross-sectional area of the plurality of compartments.

5. The storage frame module according to any of claims 2 to 4, wherein the base comprises three or more adjustable feet for levelling the base.

6. The storage frame module according to any preceding claim, wherein the transverse support structure comprises a second set of transverse struts, wherein the transverse struts of the second set are arranged perpendicular to the first direction.

7. The storage frame module according to any preceding claim, comprising a stack stopper configured to releasably hold one or more stack of storage containers into one or more compartment of the plurality of compartments.

8. The storage frame module according to any preceding claim, wherein longitudinal struts of the plurality of longitudinal struts comprise storage container supports for supporting a weight of a stack of storage containers perpendicular to the first direction.

9. The storage frame module according to any preceding claim, comprising one or more stack of storage containers in the plurality of compartments.

10. The storage frame module according to any preceding claim, wherein the transverse support structure is releasably connected to the plurality of longitudinal struts.

11. The storage frame module according to any preceding claim, having:
a first dimension no more than 12 metres in the first direction;
a second dimension no more than 3 metres perpendicular to the first direction; and
a third dimension no more than 3 metres perpendicular to the first direction and to the second dimension.

12. The storage frame module according to any preceding claim, comprising one or more lifting portion configured to be attached to a lifting device for lifting the storage frame module.

13. An automated storage and retrieval system comprising:
a storage frame comprising two or more storage frame module according to any preceding claim, wherein the two or more storage frame modules are connected together;
a plurality of container-handling vehicles configured to store and retrieve the storage containers into and out of the storage frame through the access openings; and
a rail system arranged across the first set of transverse struts, wherein the rail system comprises rails arranged to guide movement of the container-handling vehicles across the storage frame.

14. A method of assembling an automated storage and retrieval system, comprising:
positioning a first storage frame module according to any preceding claim and a second storage frame module adjacently;
connecting the adjacently positioned first storage frame module and second storage frame module.

15. The method according to claim 14, comprising one or more of:
rotating the first storage frame module from a first orientation wherein the longitudinal struts are horizontal to a second orientation wherein the longitudinal struts are vertical; and/or
rotating the first storage frame module from a second orientation wherein the longitudinal struts are vertical to a first orientation wherein the longitudinal struts are horizontal.
